# EUROPÄISCHE PATENTSCHRIFT

(11) **EP 2 573 013 B1**
(45) Veröffentlichungstag und Bekanntmachung des Hinweises auf die Patenterteilung: **20.11.2013**
(21) Anmeldenummer: 12171433.1
(22) Anmeldetag: 11.06.2012
(51) Int. Cl.: B65G 47/76, B65G 65/00, B65G 15/42

(54) **System und Verfahren zum Be- und/oder Entladen von Tablaren**
System and method for loading and unloading trays
Système et procédé de chargement et/ou déchargement de plateaux

(30) Priorität: 23.09.2011 DE 102011083257
(43) Veröffentlichungstag der Anmeldung: 27.03.2013
(73) Patentinhaber: Krones AG, 93073 Neutraubling (DE)
(72) Erfinder: Tiebel, Peter, 93077 Bad Abbach (DE); Eckert, Laura, 93197 Zeitlarn (DE); Schüsslburner, Helmut, 94315 Straubing (DE)
(74) Vertreter: Grünecker, Kinkeldey, Stockmair & Schwanhäusser

(56) Entgegenhaltungen:
- DE-A1-102008 055 704
- FR-A1- 2 592 018

## Beschreibung

Die Erfindung betrifft ein System und ein Verfahren zum Be- und/oder Entladen von Tablaren.

Ein bekanntes Verfahren zum automatischen Beladen von bewegten Tablaren ist beispielsweise das Beladen des Tablars von oben. Das Gut kann in einem spitzen Winkel von oben im freien Fall auf das Tablar aufgebracht werden. Durch die Fallhöhe ergeben sich eine damit verbundene Belastung des Guts und auch eine damit verbundene Gefahr eines Umkippens des Guts. Der Winkel des Abgabeförderers relativ zum Tablar ist zudem abhängig von der Gutlänge. Somit kann es problematisch sein, Gut mit einer großen Längenvarianz mittels Verwendung des gleichen Abgabeförderers zu beladen.

DE 10 2008 055 704 A1 offenbart ein System und ein Verfahren gemäß den Oberbegriffen der Ansprüche 1 und 18. Das Verfahren und das System nach diesem Dokument sind zum Entladen von mit Gut beladenen Tablaren gedacht. Hierbei besteht das Tablar aus einem Rahmen mit einem umlaufenden erhöhten Rand und einem Boden mit mindestens einer Ausnehmung. Innerhalb des Rahmens auf dem Boden befindet sich eine Transportplatte. Zum Entladen des Tablars wird der Rahmen abgesenkt, so dass die Oberfläche der Transportplatte mit dem umlaufenden erhöhten Rand eine Ebene bildet und das Gut von der Transportplatte abgeschoben werden kann. Um auf einfache Weise die Absenkung des Rahmens des Tablars durchzuführen, kann eine Absenkvorrichtung, die von unten durch die mindestens eine Ausnehmung hindurch greifende Stützelemente umfasst, die in Fördererrichtung beweglich sind, einen zweiten an einen ersten Zulieferförderer angrenzenden Förderer umfassen, dessen Niveau gegenüber dem Zulieferförderer abgesenkt ist.

Die als Auflage dienende Transportplatte kann über Stifte oder Führungen mit dem Rahmen des Tablars beweglich verbunden geführt werden, so dass durch diese Verzahnung eine horizontale Bewegung/Verschiebung der Platte unterbunden wird, aber eine vertikale Bewegung senkrecht zum Boden des Rahmens möglich ist.

Den Gruppen von Stützelementen können Anschlagselemente vorausgehen, um die Position der Tablare auszurichten. Das Tablar kommt von dem ersten Zulieferförderer und trifft im Übergabebereich auf ein entsprechendes Anschlagselement, so dass die mindestens eine Ausnehmung des jeweiligen Tablars bzw. dessen Rahmens mit der nächsten Gruppe der Stützelemente ausgerichtet ist.

DE 41 02 654 C2 beschreibt eine Be- und Entladevorrichtung für wannenförmige Tablare, welche Schlitze im Boden aufweisen. Die Ent- und Beladestationen sind durch einen taktgesteuerten Kettenumlauf mit Auflagestegen verbunden, die Schlitze des Tablarbodens durchsetzen können und die Seitenwände der Tablare überragen. Förderstrecken schließen beidends an den Kettenumlauf an, werden synchron mit dem Kettenumlauf angetrieben und erstrecken sich in einem Übergabeabschnitt, in welchem eine vertikale Übergabebewegung stattfindet, seitlich entlang dem Kettenumlauf mit den Auflagestegen.

Beim Auflaufen der Tablare auf den Kettenförderer werden infolge der vertikalen Übergabebewegung die Auflagestege durch die Schlitze des Tablarbodens nach oben bewegt, und dabei wird das Fördergut in eine Höhe oberhalb der Kanten der Ränder der Tablare angehoben und kann seitlich abgenommen werden.

In der Beladestation wird das Fördergut auf die Auflagestege gegeben, die dann nach unten durch die Schlitze der Tablare wieder herausbewegt werden, so dass das Fördergut auf den Tablaren abgesetzt wird.

Das Entladen und Beladen der Tablare kann während der Bewegung des Kettenumlaufs erfolgen, indem das Fördergut beim Beladen seitlich von den Auflagestegen heruntergeschoben wird oder in der Beladestation von der Seite her auf die Kettenstege geschoben wird.

Auch kann der Kettenlauf taktgesteuert immer wieder in der Entladestation und entsprechend in der Beladestation angehalten werden, um das Fördergut von den Auflagestegen abzunehmen bzw. auf diese aufzubringen, wozu beispielsweise ein Abnahme- bzw. Aufsetzrechen vorgesehen sein kann.

Bei dem Einlaufen und Auslaufen der Auflagestege ist die vertikale Bewegung auch von einer horizontalen Bewegung der Auflagen, einem Eindrehen bzw. Ausdrehen begleitet, die mit zunehmender Steghöhe und kleinerem Radius der Kettenfördererführung im Ein- bzw. Auslaufbereich zu zunehmend großen Schlitzen im Tablar und großen Schlitz- bzw. Auflagestegabständen führen. Eine zunehmende Distanz zwischen den Auflagestegen führt zu einer Instabilität beim Aufbringen und Transport des Transportgutes, insbesondere bei kurzen Gütern und führt zudem zu einem komplexeren Auf- und Abschiebevorgang für die Güter, da weniger Auflagestege zu weniger Auflagefläche und somit zu mehr Reibung und zu mehr Verschleiß an der Verpackung der Güter führen können. Ebenso kann die Dynamik beim Be- und Entladen vermindert und sogar ein kontinuierlicher Transport der Tablare beim Be- und Entladen verhindert werden, was ein Anhalten der Tablare erforderlich machen kann.

Die Patentschrift DE 41 43 282 C1 offenbart die Verwendung von Tablaren, deren Boden mit schlitzförmigen Aussparungen versehen sind, in die Profilkörper mit den an die Aussparungen angepassten Abmessungen von unten vertikal ein- und ausfahrbar sind.

Die Profilkörper bilden vom Boden des Tablars ausgehend zum Rand des Tablars hin ansteigend eine schräge Transportfläche aus, wobei der Winkel zwischen Boden und Transportfläche so gewählt wird, dass ein sicheres Abschieben des Förderguts gewährleistet wird. Die Profilkörper werden mittels einer Hubvorrichtung einseitig eingefahren, so dass nicht das gesamte Fördergut des Tablars von den Profilkörpern angehoben wird, sondern nur eine teilweise Anhebung des Förderguts erfolgt.

Eine Ausrichtung des Tablars auf die Übergabeposition erfolgt über als Bolzen ausgebildete Zentrierelemente, so dass die Profilkörper störungsfrei einfahren können.

In den Logistikprozessen zur Verteilung von Ware auf dem Weg zum Kunden gewinnen hochflexible Kommissioniersysteme wegen zunehmend kürzerer Bestellzyklen mit kleiner werdenden Bestellmengen sowie wegen einer steigenden Varianz an Artikelabmessungen und Artikelformen immer mehr Bedeutung und tragen zum operativen Erfolg von Unternehmen bei. Wegen der vorhandenen und steigenden Varianz an Artikelabmessungen und Artikelformen ist es vorteilhaft, dass diese auf Tablaren transportiert werden. Ein wesentlicher Bestandteil von Anlagen, die Tablare zum Transport verwenden, ist ein automatisiertes Be- und Entladen der Tablare. Insbesondere Güter, die wegen ihrer unebenen Bodenbeschaffenheit oder eines ungünstigen Höhen-Breiten-Verhältnisses zum Kippen neigen können, sollen prozesssicher handhabbar sein. Dies bedeutet, dass beispielsweise ruckartige Bewegungen mit hoher Beschleunigung vermieden werden sollten und dagegen kontinuierliche Bewegungsabläufe zu bevorzugen sind und dass Güter in einem sanften Übergang mit möglichst flachem Winkel zwischen Gut und Tablar auf Tablare aufgebracht oder entladen werden können. Zudem ist es vorteilhaft, wenn Tablare mit unterschiedlichen Längen in einem System verwendet werden können, so dass beispielsweise ein großer Artikel auf einem langen Tablar und ein kleiner Artikel auf einem kürzeren Tablar transportiert werden kann.

Um zudem eine hohe Durchsatzleistung der Kommissioniersysteme zu ermöglichen, sollte das Be- und/oder Entladen sowie das Synchronisieren von Tablar und Fördertechnik während eines kontinuierlichen Transports der Tablare erfolgen. Das Synchronisieren von Tablar und Fördertechnik sollte möglichst kostengünstig und robust erfolgen und idealer Weise mechanisch ohne zusätzliche Steuerungstechnik gelöst werden.

Die Aufgabe wird gelöst durch das System nach Anspruch 1 und das Verfahren nach Anspruch 18. Bevorzugte Ausführungsformen sind in den abhängigen Ansprüchen dargelegt.

Die Erfindung umfasst ein System zum Beladen von Tablaren mit Artikeln und/oder Entladen von mit Artikeln beladenen Tablaren, wobei das System folgendes umfasst: einen ersten Förderer, der zum Transport von Tablaren vorgesehen ist, wobei die Tablare in einer Transportrichtung bewegt werden; eine an den ersten Förderer anschließende Absenkvorrichtung, wobei die Absenkvorrichtung vorgesehen ist, um Tablare von dem ersten Förderer zu einem an die Absenkvorrichtung anschließenden Leistenförderer zu transportieren, wobei das Niveau des Leistenförderers gegenüber dem Niveau des ersten Förderers abgesenkt ist und wobei die Absenkvorrichtung weiter vorgesehen ist, die Tablare auf den Leistenförderer abzusenken; und eine an den Leistenförderer anschließende Aushubvorrichtung, wobei die Aushubvorrichtung vorgesehen ist, Tablare von dem Leistenförderer zu einem an die Aushubvorrichtung anschließenden zweiten Förderer zu transportieren, wobei das Niveau des Leistenförderers gegenüber dem Niveau des zweiten Förderers abgesenkt ist und wobei die Aushubvorrichtung weiter vorgesehen ist, die Tablare von dem Leistenförderer auszuheben.

Das Niveau des ersten bzw. des zweiten Förderers kann hierbei als die Höhe, in der sich die Transportoberfläche des jeweiligen Förderers befindet, angesehen werden. Die Höhe kann beispielsweise ausgehend vom Boden einer Werkhalle aus gemessen werden, in der sich das System befindet. Auch kann eine andere Referenz zur Bestimmung der Höhe verwendet werden. Als Niveau des Leistenförderers kann die Oberfläche angesehen werden, die durch die oberen Kanten der Leisten gebildet wird. Weisen die Leisten eine nicht horizontale obere Kante auf, so kann das Niveau durch den am weitesten von der Oberfläche des Leistenförderers entfernten Teil der Leiste festgelegt werden.

Die Tablare umfassen hierbei Schlitze, die so ausgebildet sind, dass sie Leisten des Leistenförderers aufnehmen können. Vorzugsweise sind die Schlitze durchgängig ausgebildet, d.h. sie reichen von der Unterseite zu der Oberseite des Tablars. Zwischen den Schlitzen können Stege angeordnet sein, die aus dem Material der Tablare bestehen, wodurch eine Stabilität der Tablare gewährleistet wird, so dass der Transport von Artikeln auf den Tablaren möglich ist.

Die Leisten, die auf dem Leistenförderer angeordnet sind, sind bei einem Absenken eines Tablars auf den Leistenförderer mittels der Absenkvorrichtung senkrecht zu einer Oberfläche des Leistenförderers angeordnet und tauchen senkrecht in die Schlitze des Tablars ein, und die Leisten sind bei einem Ausheben des Tablars von dem Leistenförderer mittels der Aushubvorrichtung senkrecht zu der Oberfläche des Leistenförderers angeordnet und tauchen senkrecht aus den Schlitzen des Tablars aus.

Um das senkrechte Einbringen und Austauchen der Leisten in bzw. aus den Schlitzen eines Tablars zu unterstützen, kann vorgesehen sein, dass die Seitenflächen der Schlitze senkrecht zu der Oberfläche des Leistenförderers angeordnet sind.

Die Leisten des Leistenförderers können im Bereich des Eintauchens in die Schlitze der Tablare und im Bereich des Absenkens aus den Schlitzen der Tablare parallel ausgerichtet sein und so eine hohe Dichte an Leisten bzw. sehr geringe Abstände zwischen den Schlitzen im Tablarboden möglich machen (neben Vibrationen findet relativ zur Transportgeschwindigkeit des Leistenförderers keine horizontale Bewegung der tragenden Flächen der Leisten statt, da sich der Leistenförderer im Bereich der Synchronisierung der Schlitze mit den Leisten und der Ent- und/oder Beladung geradlinig bewegt).

Der erste Förderer, die Absenkvorrichtung, der Leistenförderer, die Aushubvorrichtung und der zweite Förderer können in der Transportrichtung so aufeinanderfolgend angeordnet sein, dass ein kontinuierlicher Transport von Tablaren mittels dieser Elemente möglich ist.

Der Ausdruck "anschließend" kann hierbei bedeuten, dass beispielsweise an den Bereich des ersten Förderers, in dem das Förderband aus der Transportrichtung nach unten umgelenkt wird, die Absenkvorrichtung benachbart angeordnet ist, so dass ein Tablar von dem Förderband an die Absenkvorrichtung übergeben werden kann. Ebenso kann eine Aushubvorrichtung benachbart zu dem Bereich des zweiten Förderers angeordnet sein, in dem das Förderband nach oben in die Transportrichtung umgelenkt wird.

Die Absenkvorrichtung des Systems kann eine erste schiefe Ebene umfassen, mittels der ein Absenken des Tablars von dem ersten Förderer auf den Leistenförderer erfolgen kann und wobei die Aushubvorrichtung eine zweite schiefe Ebene umfassen kann, mittels der ein Ausheben des Tablars von dem Leistenförderer auf den zweiten Förderer erfolgen kann.

Beispielsweise kann die schiefe Ebene der Absenkvorrichtung so ausgebildet sein, dass die eine Seite, an der das sich in Transportrichtung bewegende Tablar zuerst ankommt, sich auf dem Niveau des ersten Förderers oder etwas unterhalb (z.B. 5 mm, 8 mm oder 10 mm) des Niveaus des ersten Förderers befindet. Dadurch kann ein Tablar, das mittels des ersten Förderers transportiert wird, ohne Probleme an die Absenkvorrichtung übergeben werden. Wäre diese eine Seite etwas höher als das Niveau des ersten Förderers angeordnet, so würde das Tablar mit dieser Seite kollidieren. Wäre die Seite hingegen deutlich tiefer als das Niveau des ersten Förderers angeordnet, so würde das Tablar über eine Stufe auf die Absenkvorrichtung gebracht, so dass sich auf dem Tablar befindliche Artikel aus dem Gleichgewicht gebracht werden könnten.

Die schiefe Ebene der Aushubvorrichtung kann so ausgebildet sein, dass die eine Seite, an der ein sich in Transportrichtung bewegendes Tablar die Aushubvorrichtung verlässt, sich auf dem Niveau des zweiten Förderers oder etwas oberhalb (z.B. 5 mm, 8 mm oder 10 mm) des Niveaus des zweiten Förderers befindet. Dadurch kann ein Tablar, das mittels der Aushubvorrichtung zu dem zweiten Förderer transportiert wird, einfach und sicher an diesen übergeben werden.

Durch die Verwendung von schiefen Ebenen kann der Niveauunterschied zwischen erstem Förderer und Leistenförderer sowie zwischen Leistenförderer und zweitem Förderer von den Tablaren überwunden werden. Vorteilhafter Weise ist eine schiefe Ebene so gestaltet, dass Artikel, die auf den Tablaren transportiert werden, nicht aus ihrer Gleichgewichtslage gebracht werden, so dass ein sicherer Transport der Artikel gewährleistet ist.

Der Ausdruck "anschließend" kann beispielsweise auch bedeuten, dass die Elemente (erster Förderer, Absenkvorrichtung, Leistenförderer, Aushubvorrichtung, zweiter Förderer) des Systems so angeordnet sind, dass sie in der Transportrichtung auch räumlich über- bzw. untereinander angeordnet sein können. Dies ist vorteilhaft im Bereich von Absenkvorrichtung und Leistenförderer sowie im Bereich von Leistenförderer und Aushubvorrichtung, da dort die Leisten des Leistenförderers in die Schlitze der Tablare eingebracht werden bzw. aus diesen ausgetaucht werden.

Das Niveau des Leistenförderers liegt im Allgemeinen tiefer als die Niveaus des ersten und des zweiten Förderers, da von dem Leistenförderer die Leisten ausgehen, welche in die Schlitze der Tablare von unten eingebracht werden sollen. Die Niveaus des ersten und des zweiten Förderers können gleich oder auch verschieden sein.

Über die erste schiefe Ebene (Absenkvorrichtung) gelangt das Tablar von dem ersten Förderer auf den Leistenförderer, wobei die Leisten, die auf dem Leistenförderer angeordnet sind, von unten senkrecht in die Schlitze der Tablare eingebracht werden. Die Leisten reichen in vollständig eingebrachten Zustand vorzugsweise über eine Oberfläche des Tablars hinaus, so dass beispielsweise ein Artikel, der sich auf einem Tablar befindet, durch die Leisten angehoben wird, so dass sich eine Beabstandung zwischen Artikel und der Oberfläche des Tablars ergibt.

Die Leisten des Leistenförderers können quaderförmig ausgebildet sein, so dass eine virtuelle Ebene, die durch die oberen Kanten (die Kanten, die von der Oberfläche des Leistenförderers einen größten Abstand ausweisen) der Leiste gelegt werden kann, horizontal verläuft. Um das Ab- bzw. Aufschieben von Artikeln einfach und sicher ausführen zu können, kann eine Leiste auch so ausgebildet sein, dass sie in Auf- bzw. Abschieberichtung der Artikel eine Anlaufschräge an der oberen Kante aufweist.

Eine Anlaufschräge kann zur Oberfläche des Leistenförderers einen Winkel von 2°, 5° oder 10° aufweisen; auch können kleinere, größere oder dazwischen liegende Winkelwerte möglich sein. Die Anlaufschräge kann sich über ein Viertel, ein Drittel oder die Hälfte der Länge der oberen Kante der Leiste erstrecken; auch können kleinere, größere oder dazwischen liegende Längenwerte der Anlaufschräge möglich sein.

Zudem können die zuvor genannten Ausführungsformen von Leisten an den Kanten seitliche Verrundungen aufweisen. Dabei können Verrundungen an Kanten, an denen zwei Schmalseiten der Leisten aneinander grenzen und/oder an den Kanten, an denen eine Schmalseite und eine Flächenseite aneinander grenzen, vorgesehen sein. Die Verrundungen können beispielsweise als Viertelkreise ausgebildet sein, wobei ein Radius des Kreises ein Fünftel, ein Viertel oder ein Drittel der Dicke der Leiste betragen kann. Auch größere, kleinere oder dazwischen liegende Radiuswerte können vorgesehen sein.

Anstatt flächenhaft massive Leisten zu verwenden, können auch solche Leisten verwendet werden, bei denen die Schmalseiten, seitliche Verrundungen und Anlaufschrägen massiv ausgeführt sind, die Flächenseiten aber nicht massiv ausgebildet sind. Die Leisten weisen somit eine bügel- bzw. bogenförmige Querschnittsform auf. Die Flächenseiten können eine waben- oder gitterförmige Struktur mit Durchlässen aufweisen.

Über die zweite schiefe Ebene (Aushubvorrichtung) gelangt das Tablar, in dessen Schlitze die Leisten eingebracht sind, von dem Leistenförderer auf den zweiten Förderer, wobei bei der Bewegung entlang der zweiten schiefen Ebene das Tablar vom Niveau des Leistenförderers auf das Niveau des zweiten Förderers gelangt, so dass die Leisten durch das Ausheben des Tablars von dem Leistenförderer aus den Schlitzen des Tablars bei dem Transport nach und nach herausbewegt werden. Wurde ein Artikel auf dem Leistenförderer durch die Leisten angehoben und dadurch eine Beabstandung zwischen Artikel und Tablar erreicht, so wird durch das Herausbewegen der Leisten aus den Schlitzen der Artikel in Richtung auf die Oberfläche des Tablars abgesenkt und kommt in Kontakt mit der Oberfläche des Tablars.

Die erste schiefe Ebene und die zweite schiefe Ebene können je mindestens eine Gleitleiste umfassen, wobei vorzugsweise die je mindestens eine Gleitleiste angetriebene und/oder nicht angetriebene Rollen umfassen kann.

Angetriebene Rollen können dafür sorgen, dass ein Tablar auf der schiefen Ebene auch transportiert wird, bevor eine Leiste in einen Schlitz eingebracht wurde und so eine Bewegung des Tablars durch den Leistenförderer erfolgt. Durch angetriebene Rollen lässt sich zudem die Transportgeschwindigkeit des Tablars auf der schiefen Ebene steuern, so dass beispielsweise eine ungewünschte Krafteinwirkung auf einen Artikel auf dem Tablar unterbunden werden kann, wenn das Tablar ohne Steuerung eine zu hohe Geschwindigkeit erreichen würde.

Nicht angetriebene Rollen können eine leichtgängige Vorwärtsbewegung des Tablars unterstützen.

Statt der ersten schiefen Ebene kann die Absenkvorrichtung eine erste Sektionsspurkranzrollenbahn umfassen, mittels der ein Absenken des Tablars von dem ersten Förderer auf den Leistenförderer erfolgen kann und statt der zweiten schiefen Ebene kann die Aushubvorrichtung eine zweite Sektionsspurkranzrollenbahn umfassen, mittels der ein Ausheben des Tablars von dem Leistenförderer auf den zweiten Förderer erfolgen kann.

Eine Sektionsspurkranzrollenbahn kann mehrere separat voneinander bewegbare Sektionen umfassen, wobei jede der Sektionen auf- und abbewegbar ist. Innerhalb der einzelnen Sektionen können Spurkranzrollen für eine Vorwärtsbewegung des Tablars sorgen. Vorteilhafterweise sind die Spurkranzrollen als seitliche Spurkranzrollen ausgebildet, so dass der Tablarboden nur auf dem Tablarrand aufliegt, wodurch die Schlitze der Tablare und somit auch die Leisten eine maximale Länge aufweisen können, ohne störend mit den seitlichen Spurkranzrollen zusammen zu wirken.

Es ist auch möglich, dass eine erste schiefe Ebene und eine zweite Sektionsspurkranzrollenbahn oder eine erste Sektionsspurkranzrollenbahn und eine zweite schiefe Ebene in dem System verwendet werden.

Die erste Sektionsspurkranzrollenbahn kann Sektionen umfassen, die absenkbar und anhebbar ausgeführt sind und/oder die zweite Sektionsspurkranzrollenbahn kann Sektionen umfassen, die absenkbar und anhebbar ausgeführt sind. Es ist möglich, dass die erste und/oder die zweite Sektionsspurkranzrollenbahn jeweils ein, zwei, drei oder mehr Sektionen aufweisen, wobei die Anzahl der Sektionen in der ersten und der zweiten Sektionsspurkranzrollenbahn verschieden oder gleich groß sein kann.

In einer Grundstellung können sich die Sektionen der ersten Sektionsspurkranzrollenbahn in einem angehobenen Zustand befinden, d.h. der Bereich der Rollen, auf dem ein Tablar zu liegen kommt, befindet sich auf dem Niveau des ersten Förderers (oder, je nach Ausführungsform, auch z.B. 5 mm, 8 mm oder 10 mm unterhalb des Niveaus des ersten Förderers).

Wird ein Tablar von dem ersten Förderer auf die erste Sektionsspurkranzrollenbahn verbracht, so kann ein Absenken der Sektionen der ersten Sektionsspurkranzrollenbahn erfolgen, bei dem alle oder mehrere Sektionen vorzugsweise gleichzeitig abgesenkt werden. Nachdem eine der Sektionen von dem Tablar überfahren wurde (d.h. auf dieser Sektion befindet sich kein Tablar mehr), kann diese entsprechende Sektion wieder in die Grundstellung verbracht werden, d.h. sie wird aus dem abgesenkten Zustand in einen angehobenen Zustand verbracht. So ist es möglich, dass ein weiteres Tablar auf die erste Sektionsspurkranzrollenbahn verbracht werden kann, während ein anderes Tablar noch durch die Sektionsspurkranzrollenbahn (auf den anderen Sektionen) transportiert wird. Es ist somit ein Transportabstand zwischen zwei Tablaren auf der Sektionsspurkranzrollenbahn möglich, der kleiner als die Tablarlänge ist.

Durch das Absenken der Sektionen der ersten Sektionsspurkranzrollenbahn wird ein Tablar auf das Niveau des Leistenförderers verbracht und die Leisten können von unten in die Schlitze des Tablars eindringen.

Das Tablar kann mittels des Leistenförderers zu der zweiten Sektionsspurkranzrollenbahn bewegt werden, wobei sich alle oder mehrere Sektionen der zweiten Sektionsspurkranzrollenbahn in der Grundstellung in einem abgesenkten Zustand befinden. Wird nun ein Tablar auf die zweite Sektionsspurkranzrollenbahn verbracht, so kann ein Anheben der Sektionen der zweiten Sektionsspurkranzrollenbahn erfolgen, bei dem alle oder mehrere Sektionen vorzugsweise gleichzeitig angehoben werden. Nachdem eine der Sektionen von dem Tablar überfahren wurde, kann die entsprechende Sektion wieder in die Grundstellung verbracht werden, d.h. sie wird aus dem angehobenen Zustand in einen abgesenkten Zustand verbracht.

Durch das Anheben der Sektionen werden die Leisten aus den Schlitzen des Tablars ausgefahren und das Tablar kann dann mittels des zweiten Förderers weiter transportiert werden.

Das System kann weiter ein Synchronisierungsmittel zum Synchronisieren von Schlitzen eines Tablars mit den Leisten umfassen, wobei mit dem Synchronisierungsmittel eine Wirkung auf ein Tablar ausgeübt wird, wenn ein Steg des Tablars auf eine Leiste des Leistenförderers trifft, wobei der Steg zwischen zwei Leisten angeordnet ist.

Das Synchronisierungsmittel kann ein Bremsmittel umfassen, das eine Abstreifbürste oder eine gefederte Andruckleiste umfasst. Diese Ausführungsformen wirken durch mechanischen Einfluss beispielsweise auf die Seiten oder die Stege eines Tablars, so dass die Bremsmittel wenig wartungsanfällig sind.

In einer anderen Ausführung kann das Synchronisierungsmittel ein Bremsmittel umfassen, das ein Band oder ein Reibrad umfasst, welches eine bremsende Wirkung über einen Drehfeldmagneten oder ein Hysterese-Element erzeugt und über ein federndes Mittel angedrückt wird. Im Gegensatz zu den vorherigen Ausführungsformen des Bremselements ist hier auch ein elektrischer Einfluss neben dem mechanischen Einfluss wirksam.

In dem Fall, dass ein Steg auf eine Leiste trifft, erzeugt das Bremselement einen mechanischen Widerstand, der größer als ein Reibwert zwischen Steg und Leiste ist, aber auch so klein ist, dass das Tablar über das Bremselement hinweg befördert werden kann.

Durch die mechanische Synchronisierung der Schlitze mit den Leisten kann ein Steuerungsaufwand des Systems möglichst klein gehalten werden, da die Verwendung von Sensoren und Aktoren, die über einen Regelkreis gesteuert werden müssen, minimiert werden kann. Aber auch eine mechatronische Lösung mit Sensoren und Aktoren zum Bremsen oder Beschleunigen von Tablar oder Fördertechnik kann zu einer effektiven und preiswerten Synchronisierung von Schlitzen und Leisten des Leistenförderers führen.

Auch kann vorgesehen sein, dass das Synchronisierungsmittel am Leistenförderer angebrachte Mitnehmer umfasst, wobei vorzugsweise der weiterfolgende Transport eines Tablars durch die Mitnehmer unterstützt wird, wobei die Mitnehmer vorzugsweise so ausgebildet sind, dass sie über die Leisten hinausstehen und in einem Abstand größer als eine Tablarlänge auf dem Leistenförderer angeordnet sind.

Das System kann weiter einen begleitenden Förderer auf dem Niveau des Leistenförderers umfassen, wobei der begleitende Förderer vorgesehen ist, um Artikel zu transportieren, mit denen Tablare beladen werden können und/oder um Artikel aufzunehmen, die von Tablaren entladen werden.

Das System kann weiter ein Ab- und Aufschiebeelement in Form einer mechanischen Führung über dem Leistenförderer zum Entladen von Artikeln auf den begleitenden Förderer bzw. zum Beladen des Tablars mit Artikeln vom beleitenden Förderer umfassen, wobei vorzugsweise die mechanische Führung mit Röllchen für eine verbesserte Gleitreibung vorgesehen ist oder aktiv angetrieben ausgeführt ist, wobei das Ab- und Aufschiebeelement vorzugsweise eine gebogene Kontur, Zonen unterschiedlicher Gleitreibung und/oder aktive Antriebe aufweist oder vorzugsweise eine Antriebsrolle an einem Ende des ein Ab- und Aufschiebeelements vorgesehen ist. An die Artikel kann somit in Zusammenspiel mit dem begleitenden Förderer ein Drehmoment übertragen werden und so eine Rotation des Artikels ausgelöst und/oder unterstützt werden.

Das Ab- und Aufschiebeelement kann in Form eines sich über dem Leistenförderer synchron zum Leistenförderer bewegenden Ab- und Aufschiebeelements zum Entladen von Artikeln auf den begleitenden Förderer bzw. zum Beladen des Tablars mit dem Transportgut vom begleitenden Förderer vorgesehen sein.

Die Leisten können abgerundete Kanten mit geringer Haft- und Gleitreibung quer zur Transportrichtung des Leistenförderers umfassen.

Vorzugsweise erfolgt die Ent- und/oder Beladung von Tablaren bei kontinuierlich angetriebenem Leistenförderer. Ebenso kann die Synchronisierung der Schlitze mit den Leisten bei kontinuierlich angetriebenem Leistenförderer erfolgen

Weiter umfasst die Erfindung Verfahren zum Beladen von Tablaren mit Artikeln und/oder Entladen von mit Artikeln beladenen Tablaren mit den folgenden Schritten: Transportieren eines Tablars mittels eines ersten Förderers in einer Transportrichtung; Absenken des Tablars mittels einer an den ersten Förderer anschließenden Absenkvorrichtung auf einen an die Absenkvorrichtung anschließenden Leistenförderer, wobei das Niveau des Leistenförderers gegenüber dem Niveau des ersten Förderers abgesenkt ist; Transportieren des Tablars mittels des Leistenförderers zu einer an den Leistenförderer anschließenden Aushubvorrichtung; Ausheben des Tablars von dem Leistenförderer mittels der Aushubvorrichtung; Transportieren des Tablars zu einem an die Aushubvorrichtung anschließenden zweiten Förderer, wobei das Niveau des Leistenförderers gegenüber dem Niveau des zweiten Förderers abgesenkt ist; wobei die Tablare Schlitze umfassen, die so ausgebildet sind, dass sie Leisten des Leistenförderers aufnehmen können, wobei bei dem Absenken des Tablars auf den Leistenförderer mittels der Absenkvorrichtung die Leisten, die auf dem Leistenförderer angeordnet sind, senkrecht zu einer Oberfläche des Leistenförderers angeordnet sind und senkrecht in die Schlitze des Tablars eintauchen und wobei bei dem Ausheben des Tablars von dem Leistenförderer mittels der Aushubvorrichtung die Leisten senkrecht zu der Oberfläche des Leistenförderers angeordnet sind und senkrecht aus den Schlitzen des Tablars austauchen.

Zudem kann das Verfahren ein Synchronisieren von Schlitzen eines Tablars mit den Leisten umfassen, wobei bei dem Synchronisieren eine Wirkung auf ein Tablar ausgeübt wird, wenn ein Steg des Tablars auf eine Leiste des Leistenförderers trifft, wobei der Steg zwischen zwei Leisten angeordnet ist.

Vorteilhafter Weise umfasst das Verfahren weiter ein Beladen eines Tablars mit einem Artikel, wobei der Artikel mittels eines begleitenden Förderers transportiert wird, der sich auf dem Niveau des Leistenförderers befindet, wobei der Artikel mittels eines Ab- und Aufschiebelements von dem begleitenden Förderer auf die Leisten des Leistenförderer verbracht wird, die in die Schlitze des Tablars eingebracht sind und/oder ein Entladen eines Tablars, auf dem sich ein Artikel befindet, umfasst, wobei der Artikel mittels des Ab- und Aufschiebelements von den Leisten des Leistenförderer, die in die Schlitze des Tablars eingebracht sind, auf den begleitenden Förderer verbracht wird.

Weitere Vorteile, Merkmale und Einzelheiten der Erfindung ergeben sich aus der nachfolgenden Beschreibung von bevorzugten Ausführungsbeispielen sowie anhand der Zeichnungen. Dabei zeigt:
Figur 1A eine Ausführungsform des Systems zum Be- und Entladen von Tablaren mit als schiefen Ebenen ausgebildeten Absenk- und Aushubvorrichtungen in seitlicher Ansicht,
Figur 1B das System aus Figur 1A in einer Draufsicht bei einem Beladevorgang eines Tablars,
Figur 1C das System aus Figur 1A in einer Draufsicht bei einem Entladevorgang eines Tablars,
Figur 2 eine Ausführungsform des Systems zum Be- und Entladen von Tablaren mit als Sektionsspurkranzrollenbahn ausgebildeten Absenk- und Aushubvorrichtungen in seitlicher Ansicht,
Figur 3 einen Querschnitt eines Tablars mit Schlitzen und Leisten des Leistenförderers,
Figur 4 eine Draufsicht auf ein Tablar mit Schlitzen,
Figur 5 eine Ansicht von Leisten des Leistenförderers,
Figur 6A eine erste Ausführungsform des Bremselements und
Figur 6B eine zweite Ausführungsform des Bremselements.

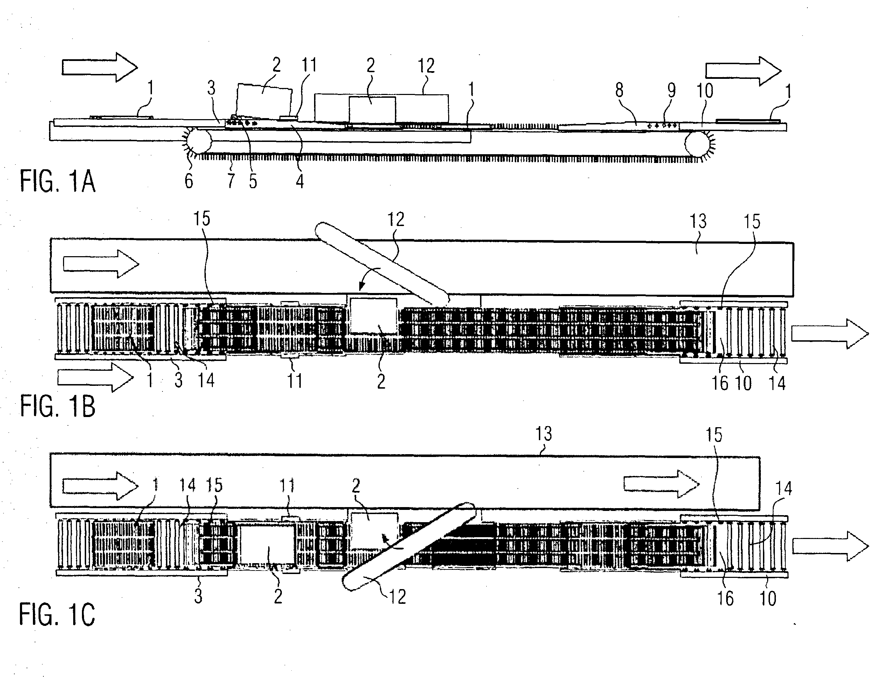

Figur 1A zeigt eine erste Ausführungsform des Systems Beladen von Tablaren 1 mit Artikeln 2 und/oder Entladen von mit Artikeln 2 beladenen Tablaren 1. Das System umfasst einen ersten Förderer 3, eine an den ersten Förderer 3 anschließende Absenkvorrichtung 4, einen an die Absenkvorrichtung anschließenden Leistenförderer 6, eine an den Leistenförderer 6 anschließende Aushubvorrichtung 8 und einen an die Aushubvorrichtung 8 anschließenden zweiten Förderer 10, wobei die Absenkvorrichtung eine erste schiefe Ebene 4 umfasst, mittels der ein Absenken des Tablars 1 von dem ersten Förderer 3 auf den Leistenförderer 6 erfolgt und wobei die Aushubvorrichtung eine zweite schiefe Ebene 8 umfasst, mittels der ein Ausheben des Tablars 1 von dem Leistenförderer 6 auf den zweiten Förderer 10 erfolgt.

Zudem umfasst dieses System einen begleitenden Förderer 13, der Artikel 2, die auf ein Tablar 1 verbracht werden sollen, transportiert bzw. Artikel 2 aufnimmt, die von einem Tablar 1 abgeschoben werden. Das Beladen bzw. Entladen mit bzw. von Artikeln 2 kann mittels eines Ab- und Aufschiebeelements 12 erfolgen.

Der Transport der Tablare 1 auf dem ersten Förderer 3 und auf dem zweiten Förderer 10 kann mittels durchgängiger Spurkranzrollen 14 erfolgen, wobei im Übergangsbereich zwischen ersten Förderer 3 und erster schiefen Ebene 4 sowie im Übergangsbereich zwischen zweiter schiefer Ebene 8 und zweitem Förderer 10 die durchgängigen Spurkranzrollen 14 durch seitliche Spurkranzrollen 15 ersetzt sind, um ein Absenken des Tablars 1 auf die Leisten 7 des Leistenförderers 6 bzw. ein Ausheben des Tablars 1 von den Leisten 7 zu ermöglichen. Auf den durchgängigen Spurkranzrollen 14 liegt der Tablarboden auf, wohingegen bei den seitlichen Spurkranzrollen 15 nur der Tablarrand aufliegt.

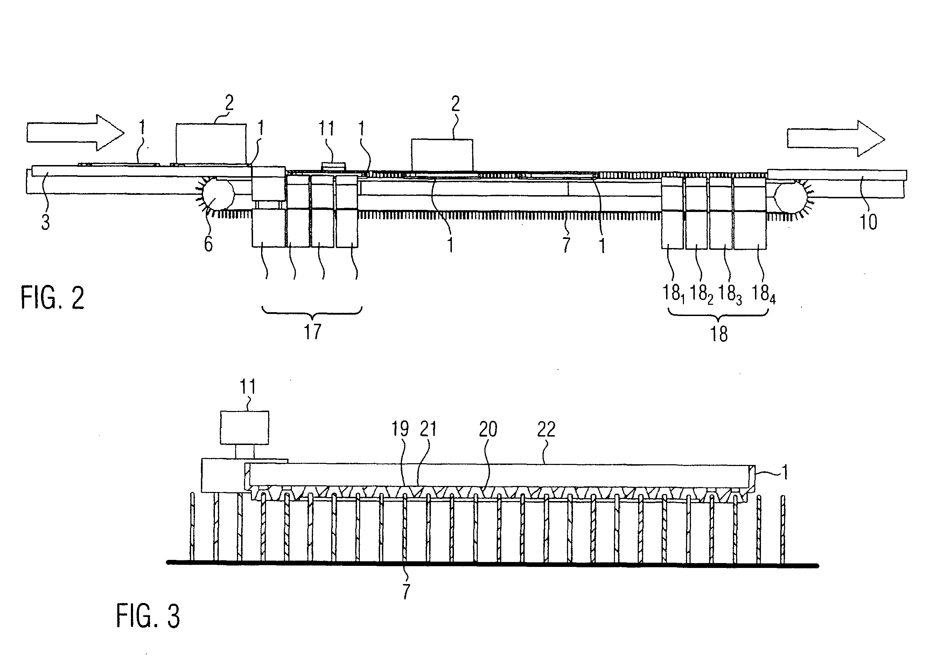

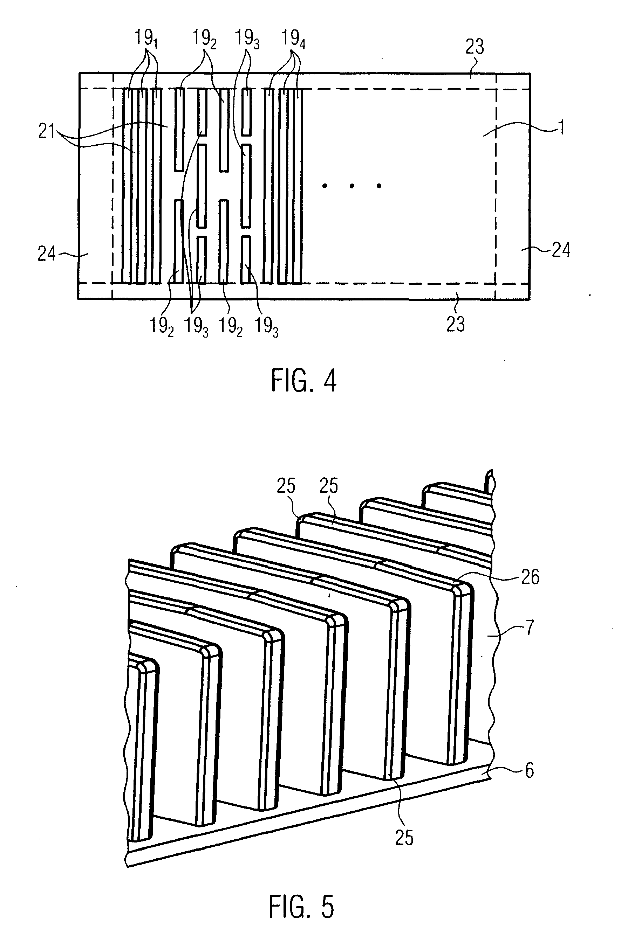

Durch die seitlichen Spurkranzrollen 15 wird ein Freiraum 16 gebildet, in dem sich die Umlenkung des Leistenförderers 6 befindet. Der Transport der Tablare 1 mittels der seitlichen Spurkranzrollen 15 gestattet zudem, dass die Schlitze 19 der Tablare 1 und somit auch die Leisten 7 eine maximale Länge aufweisen können (siehe auch Figur 4). Die Schlitze können eine Einführschräge 20 umfassen (siehe auch Figur 3).

Über die erste schiefe Ebene 4 können Tablare 1 von dem ersten Förderer 3 auf den Leistenförderer 6 verbracht werden, wobei durch den Winkel der schiefen Ebene 4 ein langsamer Übergang von dem höher liegenden Niveau des ersten Förderers 3 auf das niedriger liegende Niveau des Leistenförderers 6 erfolgen kann. Somit kann eine ungewünschte Krafteinwirkung auf Artikel 2, die sich auf den Tablaren 2 befinden, verhindert werden. Mittels der ersten schiefen Ebene 4 kann auch die Absenkgeschwindigkeit eines Tablars 1 gesteuert werden. Wie dargestellt, kann die erste schiefe Ebene 4 Rollen 5 umfassen, die angetrieben und/oder nicht angetrieben sind.

Ein Tablar 1 kann also über die schiefe Ebene 4 auf den Leistenförderer 6 gelangen und die Leisten 7 können von unten in die Schlitze 19 des Tablars 1 eingebracht werden. Artikel 2, die auf dem Tablar 1 vorhanden sind, werden durch die Leisten 7 angehoben, so dass die Artikel 2 nicht mehr mit der Oberfläche des Tablars 1 in Kontakt sind, sondern durch die Leisten 7 gestützt werden, wodurch ein Aufliegebereich eines Artikels 2 verkleinert wird. Diese Verkleinerung kommt dadurch zustande, dass die Längsseiten der Leisten 7 zusammen eine kleinere Fläche aufweisen als die Oberfläche des Tablars 1, die sie durchdringen.

Der Leistenförderer 6 kann ein Plattenband mit angebrachten Leisten, eine Modulkette mit Leisten oder eine Gummiblockkette, eine Kette, einen Riemen oder ein Band mit aufgebrachten Leisten umfassen. Die Leisten 7 können hierbei durchgängig oder sektionsweise angeordnet sein. Vorzugsweise umfassen die Leisten 7 einen gleitfreudigen Kunststoff. Die Kanten der Leisten 7 können Verrundungen 25 aufweisen und zudem kann eine Anlaufschräge 26 vorgesehen sein, die ein leichtes Auf- bzw. Abschieben von Artikeln ermöglicht (siehe auch Figur 5).

Um eine Synchronisierung der Schlitze 19 mit den Leisten 7 zu erreichen, ist ein Bremselement 11 im Bereich der ersten schiefen Ebene 4 angeordnet. In dem Fall, dass ein Steg 21 auf eine Leiste 7 trifft, erzeugt das Bremselement 11 einen mechanischen Widerstand, der größer ist als der Reibwert zwischen der Oberfläche des Stegs 21 und der Oberfläche der Leiste 7, aber auch so klein ist, dass das Tablar 1 über das Bremselement 11 hinweg befördert werden kann.

Trifft eine Leiste 7 auf einen Steg 21 des Tablars 1, so tritt zwischen der Oberfläche der Leiste 7 und der Oberfläche des Stegs 21 ein Reibwert RW_{LS} auf, der kleiner ist als der Reibwert RW_{TB}, der zwischen einer Oberfläche des Tablars 1 und der Oberfläche des Bremselements 11 auftritt. Da RW_{LS} kleiner ist als RW_{TB} kann das Bremselement 11 eine bremsende Wirkung auf das Tablar 1 ausüben. Diese bremsende Wirkung bleibt bestehen, bis die Leiste 7 in einen Schlitz 19 des Tablars 1 eingebracht wird. Dann kann eine Vorwärtsbewegung des Tablars 1 mittels der in die Schlitze eingebrachten Leisten 7 des Leistenförderers 6 erfolgen. Durch die Vorwärtsbewegung das Tablars 1 kann die bremsende Wirkung des Bremselements 11 überwunden werden.

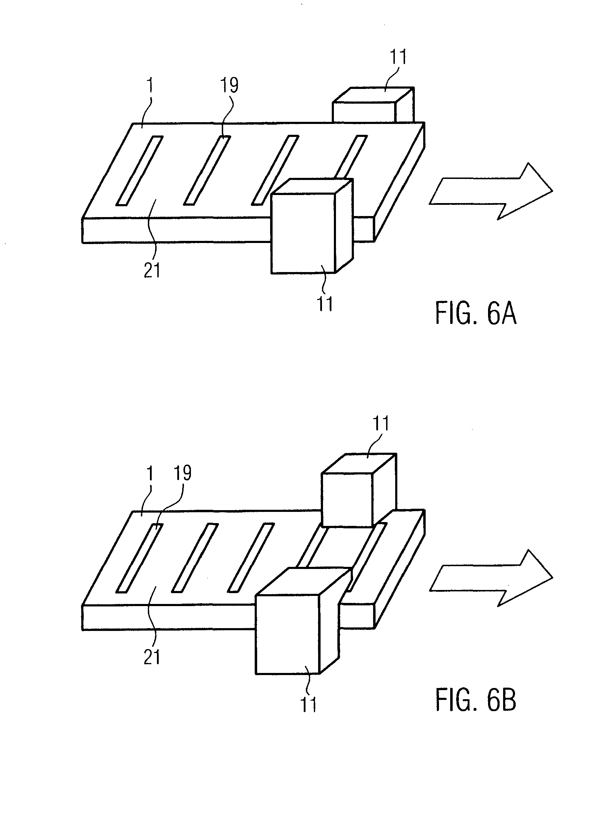

Damit das Bremselement 11 eine bremsende Wirkung auf das Tablar 1 ausüben kann, kann das Bremselement 11 seitlich auf das Tablar wirken (Figur 6A) oder seitlich und beispielsweise von oben auf das Tablar wirken (Figur 6B). Unter seitlich ist hierbei zu verstehen, dass wenn sich das Tablar 1 in eine Transportrichtung bewegt, das Bremselement 11 an den Seitenflächen des Tablars, die parallel zu der Transportrichtung verlaufen angreift.

Im weiteren Verlauf können Artikel 2 mittels eines Ab- und Aufschiebeelements 12 von den Leisten 7 geschoben werden und beispielsweise auf einen parallel zum Leistenförderer 6 verlaufenden begleitenden Förderer 13 verbracht werden (siehe auch Figur 1C). Von diesem begleitenden Förderer 13 können mittels des Ab- und Aufschiebeelements 12 auch Artikel 2 auf die Leisten 7 geschoben werden (siehe auch Figur 1 B).

Nach einem Entlade- und/oder Beladevorgang wird das Tablar 1 durch den Leistenförderer 6 zu der zweiten schiefen Ebene 8 transportiert, über die das Tablar 1 auf den zweiten Förderer 10 gelangt.

Wie dargestellt, kann die erste schiefe Ebene 8 Rollen 9 umfassen, die angetrieben und/oder nicht angetrieben sind.

In Figur 1 B ist ein Beladevorgang eines Tablars 1 gezeigt, bei dem mittels des Ab- und Aufschiebeelements 12 ein Artikel 2 von einem begleitenden Förderer 13 auf die Leisten 7 geschoben wird, die das Tablar 1, das sich auf dem Leistenförderer 6 befindet, durch die Schlitze 19 durchdringen.

Figur 1C zeigt einen Entladevorgang eines Tablars 1, bei dem mittels des Ab- und Aufschiebeelements 12 ein Artikel 2 von den Leisten 7, die das Tablar 1, das sich auf dem Leistenförderer 6 befindet, durch die Schlitze 19 durchdringen, auf den begleitenden Förderer 13 geschoben wird.

Das Ab- und Aufschiebeelement 12 kann eine gleitfreudige Oberfläche oder eine Röllchenleiste umfassen, so dass eine Relativbewegung des Artikels 2 quer zu den Leisten 7 erleichtert wird und ein sanftes Abschieben bzw. Aufschieben mit geringen Kräften quer zur Ab- bzw. Aufschubrichtung möglich ist. Das Ab- und Aufschiebeelement 12 kann einen Bandabweiser, eine Röllchen- oder Gleitleiste, einen Pusher oder einen Drehabschieber umfassen.

Figur 2 zeigt eine zweite Ausführungsform des Systems zum Beladen von Tablaren 1 mit Artikeln 2 und Entladen von mit Artikeln 2 beladenen Tablaren 1. Das System umfasst einen ersten Förderer 3, eine an den ersten Förderer 3 anschließende Absenkvorrichtung 4, einen an die Absenkvorrichtung anschließenden Leistenförderer 6, eine an den Leistenförderer 6 anschließende Aushubvorrichtung 8 und einen an die Aushubvorrichtung 8 anschließenden zweiten Förderer 10, wobei die Absenkvorrichtung eine erste Sektionsspurkranzrollenbahn 17 umfasst, mittels der ein Absenken des Tablars 1 von dem ersten Förderer 3 auf den Leistenförderer 6 erfolgt und wobei die Aushubvorrichtung eine zweite Sektionsspurkranzrollenbahn 18 umfasst, mittels der ein Ausheben des Tablars 1 von dem Leistenförderer 6 auf den zweiten Förderer 10 erfolgt

Die erste Sektionsspurkranzrollenbahn 17 umfasst in der Darstellung vier Sektionen 17₁, 17_{2,} 17₃, 17₄, die absenkbar und anhebbar ausgeführt sind. Die zweite Sektionsspurkranzrollenbahn 18 umfasst ebenfalls vier Sektionen 18₁, 18₂, 18₃, 18₄, die absenkbar und anhebbar ausgeführt sind. Es ist möglich, dass die erste und/oder die zweite Sektionsspurkranzrollenbahn 17, 18 mehr als vier oder weniger als vier Sektionen aufweisen, auch muss die Anzahl der Sektionen in der ersten und der zweiten Sektionsspurkranzrollenbahn nicht gleich groß sein.

In einer Grundstellung befinden sich die vier Sektionen 17₁, 17₂, 17₃, 17₄ der ersten Sektionsspurkranzrollenbahn 17 in einem angehobenen Zustand. Wird nun ein Tablar 1 auf die erste Sektionsspurkranzrollenbahn 17 verbracht, so erfolgt ein Absenken der Sektionen 17₁, 17₂, 17₃, 17₄ der ersten Sektionsspurkranzrollenbahn 17 bei dem alle vier Sektionen 17₁, 17₂, 17₃, 17₄ vorzugsweise gleichzeitig abgesenkt werden. Wurde eine der Sektionen 17₁, 17₂, 17₃, 17₄ von dem Tablar 1 überfahren, so wird die entsprechende Sektion 17₁, 17₂, 17₃, 17₄ wieder in die Grundstellung verbracht, d.h. sie wird aus dem abgesenkten Zustand in einen angehobenen Zustand verbracht. So ist es möglich, dass ein weiteres Tablar 1 auf die erste Sektionsspurkranzrollenbahn 17 verbracht werden kann, während ein anderes Tablar 1 noch durch die Sektionsspurkranzrollenbahn 17 transportiert wird. Es kann somit ein Transportabstand zwischen zwei Tablaren 1 auf der Sektionsspurkranzrollenbahn 17 möglich, der kleiner als die Tablarlänge ist.

Durch das Absenken der Sektionen 17₁, 17_{2,} 17_{3,} 17₄ der ersten Sektionsspurkranzrollenbahn 17 wird ein Tablar 1 auf das Niveau des Leistenförderers 6 verbracht und die Leisten 7 können von unten in die Schlitze 19 des Tablars 1 eindringen. Um eine Synchronisierung der Schlitze 19 mit den Leisten 7 zu erreichen, ist ein Bremselement 11 im Bereich der ersten schiefen Ebene 4 angeordnet. In dem Fall, dass ein Steg 21 auf eine Leiste 7 trifft, erzeugt das Bremselement 11 einen mechanischen Widerstand, der größer ist als der Reibwert zwischen der Oberfläche des Stegs 21 und der Oberfläche der Leiste 7, aber auch so klein ist, dass das Tablar 1 über das Bremselement 11 hinweg befördert werden kann. Durch diese Synchronisierung wird erreicht, dass die Leisten 7 des Leistenförderers 6 in die Schlitze 19 des Tablars 1 eingebracht werden können und das Tablar 1 nicht beispielsweise auf den Leisten 7 aufliegt.

Wenn sich Artikel 2 auf dem Tablar 1 befinden, können sie durch die Leisten 7 angehoben werden und die Artikel 2 können durch ein Ab- und Aufschiebeelement 12, wie in Figur 1C beschrieben, von den Leisten 7 beispielsweise auf einen parallel zum Leistenförderer 6 verlaufenden begleitenden Förderer 13 verbracht werden. Wenn ein Tablar 1 beladen werden soll, so können ein oder mehrere Artikel von dem parallel zum Leistenförderer 6 verlaufenden begleitenden Förderer 13 auf die Leisten 7, welche die Schlitze 19 des Tablars durchdringen, mittels des Ab- und Aufschiebeelements 12, wie in Figur 1B beschrieben, aufgebracht werden.

Das Tablar 1, mit oder ohne Artikel 2, wird durch den Leistenförderer 6 zu der zweiten Sektionsspurkranzrollenbahn 18 bewegt, wobei sich die vier Sektionen 18₁, 18₂, 18₃, 18₄ in der Grundstellung in abgesenktem Zustand befinden. Wird nun ein Tablar 1 auf die zweite Sektionsspurkranzrollenbahn 18 verbracht, so erfolgt ein Anheben der Sektionen 18₁, 18₂, 18₃, 18₄ der zweiten Sektionsspurkranzrollenbahn 18 bei dem alle vier Sektionen 18₁, 18₂, 18₃, 18₄ vorzugsweise gleichzeitig abgesenkt werden. Wurde eine der Sektionen 18₁, 18₂, 18₃, 18₄ von dem Tablar 1 überfahren, so wird die entsprechende Sektion 18₁, 18₂, 18₃, 18₄ wieder in die Grundstellung verbracht, d.h. sie wird aus dem angehobenen Zustand in einen abgesenkten Zustand verbracht.

Durch das Anheben der Sektionen 18₁, 18₂, 18₃, 18₄ werden die Leisten 7 aus den Schlitzen 19 des Tablars 1 ausgefahren. Wenn sich Artikel 2 auf den Leisten 7 befinden, so kommen diese nun auf dem Tablar 1 zu liegen. Dadurch ist die Auflagefläche größer und ein sicherer, d.h. beispielsweise rutschfreier Transport der Artikel 2 auf dem Tablar 1 ist auch über längere Strecken möglich. Das Tablar 1 kann dann mittels des zweiten Förderers 10 weiter transportiert werden.

Figur 3 zeigt eine Schnittansicht eines Tablars 1, das Schlitze 19 aufweist. Die Schlitze 19 weisen Einfuhrschrägen 20 auf, die so ausgebildet sind, dass sie zu der Fläche des Tablars 1 hin, auf dem Artikel 2 zu liegen kommen, enger sind als zu der Fläche des Tablars 1 hin, die auf dem Leistenförderer 6 zu liegen kommt.

Die Leisten 7 weisen eine Höhe auf, die so bemessen ist, dass sie nach einem Einbringen der Leisten 7 in die Schlitze 19 über eine Oberfläche, auf der die Artikel 2 aufliegen oder über einen Rand des Tablars 1 hinausreichen. Dadurch ist gewährleistet, dass Artikel 2 nicht mehr mit der Oberfläche des Tablars 1 in Kontakt sind, sondern durch die Leisten 7 gestützt werden, wodurch ein Aufliegebereich eines Artikels 2 verkleinert wird. Diese Verkleinerung kommt dadurch zustande, dass die Längsseiten der Leisten 7 zusammen eine kleinere Fläche aufweisen als die Oberfläche des Tablars 1, die sie durchdringen.

Weist das Tablar 1 einen Rand auf, der über die Fläche hinausragt, auf der die Artikel 2 zu liegen kommen, haben die Leisten 7 vorzugsweise eine solche Länge, dass sie, wenn sie in die Schlitze 19 eingebracht sind, Artikel 2 so weit anheben, dass die Artikel 2 mindestens bis oberhalb des Randes angehoben werden, wodurch ein Abschieben der Artikel 2 ermöglicht wird. Auch für ein Aufbringen von Artikeln 2 auf die Leisten 7, sollten diese vorzugsweise mindestens bis oberhalb des Rands des Tablars 1 reichen.

Figur 4 zeigt eine Draufsicht auf ein Tablar 1, das verschiedene Ausführungsformen von Schlitzen 19, 19₁, 19₂, 19₃ aufweist, wobei die Schlitze 19, 19₁, 19₂, 19₃ durch Stege 21 voneinander getrennt sind. Die Stege 21 bestehen aus dem gleichen Material wie das Tablar 1 und sind erforderlich, damit das Tablar 1 eine ausreichende Stabilität aufweist und Artikel 2 ohne eine, den Transportablauf störende Verformung transportieren kann.

In Bereichen 24 des Tablars 1, die bei einem Transport auf einem Förderer in Transportrichtung vorne bzw. hinten angeordnet sind, sollten vorzugsweise keine Schlitze 19, 19₁, 19₂, 19₃ vorhanden sein, wobei dieser Bereich 24 nicht breiter wie ein Steg 21 sein sollte, damit ein Absenken des Tablars 1 auf den Leistenförderer 6 möglich ist.

In den seitlichen Bereichen 23 des Tablars 1, die parallel zu einer Transportrichtung angeordnet sind, sollten ebenfalls keine Schlitze vorhanden sein, da hier Spurkranzrollen 15 auf das Tablar 1 einwirken können, um einen Transport des Tablars 1 zu gewährleisten. Zudem wäre, selbst wenn Schlitze 19, 19₁, 19₂, 19₃ vorhanden sein sollten, das Einbringen von Leisten nicht möglich, da sie mit den Spurkranzrollen 15 bei einem Transport des Tablars 1 kollidieren würden und somit der Transportablauf gestört würde.

Das in Figur 4 gezeigte Tablar 1 umfasst sechs Schlitze 19₁, die sich außerhalb der seitlichen Bereiche 23 des Tablars 1 über die gesamte Breite des Tablars erstrecken. Dadurch ist es möglich Leisten 7 in die Schlitze 19₁ einzubringen, die eine Stützung eines Artikels 1 über einen großen Bereich ermöglichen. Um jedoch eine ausreichende Stabilität des Tablars 1, trotz der vorhandenen Schlitze 19, 19₁, 19₂, 19₃ zu gewährleisten, ist es vorteilhaft, wenn auch Schlitze 19, 19₁, 19₂, 19₃ vorhanden sind, die sich nicht über die gesamte Breite des Tablars 1 erstrecken, so dass durch die, zwischen den Schlitzen 19, 19₁, 19₂, 19₃ vorhandenen Stege 21 beispielsweise ein Durchbiegen des Tablars 1 bei Aufbringen eines Artikels 1 verhindert wird. Die Schlitze 19₂, 19₃ erstrecken sich nur über einen Teil der Breite des Tablars 1, so dass der Bereich der durch die Stege 21 eingenommen wird, größer ist als der Bereich, der durch die Stege zwischen Schlitze 19₁, die sich über die gesamte Breite des Tablars 1 erstrecken, eingenommen wird. Bei einem Tablar 1 mit versetzten Stegen 21 bzw. versetzten Schlitzen 19 kann vorzugsweise statt einer Synchronisierung mittels eines Bremselements 11, das eine bremsende Wirkung auf das Tablar 1 ausübt, eine Synchronisierung mittels Mitnehmern erfolgen.

Figur 5 zeigt exemplarisch drei Leisten 7 eines Leistenförderers 6. Die Leisten 7 sind mit einer Längsseite mit dem Leistenförderer 6 verbunden und weisen im dargestellten Fall senkrecht von der Oberfläche des Leistenförderers 6 weg. Die Längsseite, die nicht mit dem Leistenförderer 6 verbunden ist und die bei einem Einbringen der Leiste 7 in einen Schlitz 19, 19₁, 19₂, 19₃ eines Tablars 1 zuerst auf dem Schlitz 19, 19₁, 19₂, 19₃ trifft, weist eine Verrundung 25 auf, so dass ein leichtes Einbringen in den Schlitz 19, 19₁, 19₂, 19₃ ermöglicht wird. Zudem verringern die Verrundungen 25 an den Kanten der Leisten 7 beim Beladen oder Entladen eines Artikels 2 die Reibung zwischen Artikel 2 und Leiste 7, wobei aber trotzdem eine ausreichende Stützung durch die Leiste 7 gewährleistet ist. Zudem können, wie hier dargestellt, die Leisten 7 eine Anlaufschräge 26 an den oberen Kanten aufweisen.

## Patentansprüche

1. System zum Beladen von Tablaren (1) mit Artikeln (2) und/oder Entladen von mit Artikeln (2) beladenen Tablaren (1), wobei das System umfasst:
mehrere Tablare (1),
einen ersten Förderer (3), der zum Transport der Tablaren (1) vorgesehen ist, wobei die Tablare (1) in einer Transportrichtung bewegt werden,
einen Leistenförderer (6),
eine an den ersten Förderer (3) anschließende Absenkvorrichtung (4, 17), wobei die Absenkvorrichtung (4, 17) vorgesehen ist, die Tablare (1) von dem ersten Förderer (3) zu dem an die Absenkvorrichtung (4, 17) anschließenden Leistenförderer (6) zu transportieren, wobei das Niveau des Leistenförderers (6) gegenüber dem Niveau des ersten Förderers (3) abgesenkt ist und wobei die Absenkvorrichtung (4, 17) weiter vorgesehen ist, die Tablare (1) auf den Leistenförderer (6) abzusenken,
einen zweiten Förderer (10),
eine an den Leistenförderer (6) anschließende Aushubvorrichtung (8, 18), wobei die Aushubvorrichtung (8, 18) vorgesehen ist, die Tablare (1) von dem Leistenförderer (6) zu dem an die Aushubvorrichtung (8, 18) anschließenden zweiten Förderer (10) zu transportieren, wobei das Niveau des Leistenförderers (6) gegenüber dem Niveau des zweiten Förderers (10) abgesenkt ist und wobei die Aushubvorrichtung (8, 18) weiter vorgesehen ist, die Tablare (1) von dem Leistenförderer (6) auszuheben,
wobei die Tablare (1) Schlitze (19) umfassen, die so ausgebildet sind, dass sie Leisten (7) des Leistenförderers (6) aufnehmen können,
**dadurch gekennzeichnet, dass**
die Leisten (7), die auf dem Leistenförderer (6) angeordnet sind, bei einem Absenken eines Tablars (1) auf den Leistenförderer (6) mittels der Absenkvorrichtung (4, 17) senkrecht zu einer Oberfläche des Leistenförderers (6) angeordnet sind und senkrecht in die Schlitze (19) des Tablars (1) eintauchen und wobei die Leisten (7) bei einem Ausheben des Tablars (1) von dem Leistenförderer (6) mittels der Aushubvorrichtung (8, 18) senkrecht zu der Oberfläche des Leistenförderers (6) angeordnet sind und senkrecht aus den Schlitzen (19) des Tablars (1) austauchen.

2. Das System nach Anspruch 1, wobei das System weiter ein Synchronisierungsmittel zum Synchronisieren von Schlitzen (19) eines Tablars (1) mit den Leisten (7) umfasst, mit dem eine Wirkung auf ein Tablar (1) ausgeübt wird, wenn ein Steg (21) des Tablars (1) auf eine Leiste (7) des Leistenförderers (6) trifft, wobei der Steg (21) zwischen zwei Leisten (7) angeordnet ist.

3. Das System nach Anspruch 2, wobei das Synchronisierungsmittel ein Bremsmittel (11) umfasst, das eine Abstreifbürste oder eine gefederte Andruckleiste umfasst.

4. Das System nach Anspruch 2, wobei das Synchronisierungsmittel ein Bremsmittels (11) umfasst, das ein Band oder ein Reibrad umfasst, welches eine bremsende Wirkung über einen Drehfeldmagnet oder ein Hysterese-Element erzeugt und über ein federndes Mittel angedrückt wird.

5. Das System nach Anspruch 2, wobei das Synchronisierungsmittel am Leistenförderer (6) angebrachte Mitnehmern umfasst, wobei vorzugsweise der weiterfolgende Transport eines Tablars (1) durch die Mitnehmer unterstützt wird, wobei die Mitnehmer vorzugsweise so ausgebildet sind, dass sie über die Leisten (7) hinausstehen und in einem Abstand größer als eine Tablarlänge auf dem Leistenförderer (6) angeordnet sind.

6. Das System nach einem der Ansprüche 1 bis 5, wobei die Absenkvorrichtung (4, 17) eine erste schiefe Ebene (4) umfasst, mittels der ein Absenken des Tablars (1) von dem ersten Förderer (3) auf den Leistenförderer (6) erfolgt und wobei die Aushubvorrichtung (8, 18) eine zweite schiefe Ebene (8) umfasst, mittels der ein Ausheben des Tablars (1) von dem Leistenförderer (6) auf den zweiten Förderer (10) erfolgt.

7. Das System nach Anspruch 6, wobei die erste schiefe Ebene (4) und die zweite schiefe Ebene (8) je mindestens eine Gleitleiste umfassen, wobei vorzugsweise die je mindestens eine Gleitleiste angetriebene Rollen und/oder nicht angetriebene Rollen umfasst.

8. Das System nach einem der Ansprüche 1 bis 5, wobei die Absenkvorrichtung (4, 17) eine erste Sektionsspurkranzrollenbahn (17) umfasst, mittels der ein Absenken des Tablars (1) von dem ersten Förderer (3) auf den Leistenförderer (6) erfolgt und wobei die Aushubvorrichtung (8, 18) eine zweite Sektionsspurkranzrollenbahn (18) umfasst, mittels der ein Ausheben des Tablars (1) von dem Leistenförderer (6) auf den zweiten Förderer (10) erfolgt.

9. Das System nach Anspruch 8, wobei die erste Sektionsspurkranzrollenbahn (17) Sektionen (17₁, 17₂, 17₃, 17₄) umfasst, die absenkbar und anhebbar sind und/oder die zweite Sektionsspurkranzrollenbahn (18) Sektionen (18₁, 18₂, 18₃, 18₄) umfasst, die absenkbar und anhebbar sind.

10. Das System nach Anspruch 9, wobei bei einem Absenken der Sektionen (17₁, 17₂, 17₃, 17₄) der ersten Sektionsspurkranzrollenbahn (17) alle Sektionen (17₁, 17₂, 17₃, 17₄) vorzugsweise gleichzeitig abgesenkt werden und/oder wobei bei einem Anheben der Sektionen (18₁, 18₂, 18₃, 18₄) der zweiten Sektionsspurkranzrollenbahn (18) alle Sektionen (18₁, 18₂, 18₃, 18₄) vorzugsweise gleichzeitig angehoben werden.

11. Das System nach Anspruch 9 oder 10, wobei bei einem Absenken der Sektionen (17₁, 17₂, 17₃, 17₄) der ersten Sektionsspurkranzrollenbahn (17) mehrere Sektionen (17₁, 17₂, 17₃, 17₄) vorzugsweise gleichzeitig abgesenkt werden und/oder wobei bei einem Anheben der Sektionen (18₁, 18₂, 18₃, 18₄) der zweiten Sektionsspurkranzrollenbahn (18) mehrere Sektionen (18₁, 18₂, 18₃, 18₄) vorzugsweise gleichzeitig angehoben werden.

12. Das System nach einem der Ansprüche 1 bis 11, wobei das System weiter einen begleitenden Förderer (13) auf dem Niveau des Leistenförderers (6) umfasst, wobei der begleitende Förderer (13) vorgesehen ist, um Artikel (2) zu transportieren, mit denen Tablare (1) beladen werden können und/oder um Artikel (2) aufzunehmen, die von Tablaren (1) entladen werden.

13. Das System nach Anspruch 12, wobei das System weiter ein Ab- und Aufschiebeelement (12) in Form einer mechanischen Führung über dem Leistenförderer (6) zum Entladen von Artikeln (2) auf den begleitenden Förderer (13) bzw. zum Beladen des Tablars (1) mit Artikeln (2) vom beleitenden Förderer (13) umfasst, wobei vorzugsweise die mechanische Führung mit Röllchen für eine verbesserte Gleitreibung vorgesehen ist oder aktiv angetrieben ausgeführt ist, wobei das Ab- und Aufschiebeelement (12) vorzugsweise eine gebogene Kontur, Zonen unterschiedlicher Gleitreibung und/oder aktive Antriebe aufweist oder vorzugsweise eine Antriebsrolle an einem Ende des Abweisers vorgesehen ist.

14. Das System nach Anspruch 13, wobei das Ab- und Aufschiebeelement (12) in Form eines sich über dem Leistenförderer (6) synchron zum Leistenförderer (6) bewegenden Abschiebers zum Entladen von Artikeln (2) auf den begleitenden Förderer (13) bzw. zum Beladen des Tablars (1) mit den Artikeln (2) vom begleitenden Förderer (13) vorgesehen ist.

15. Das System nach einem der Ansprüche 1 bis 14, wobei die Leisten (7) abgerundete Kanten mit geringer Haft- und Gleitreibung quer zur Transportrichtung des Leistenförderers (6) umfassen.

16. Das System nach einem der Ansprüche 1 bis 15, wobei die Ent- und/oder Beladung bei kontinuierlich angetrieben Leistenförderer (6) erfolgt.

17. Das System nach einem der Ansprüche 2 bis 16, wobei die Synchronisierung der Schlitze (19) mit den Leisten bei kontinuierlich angetrieben Leistenförderer (6) erfolgt.

18. Verfahren zum Beladen von Tablaren (1) mit Artikeln (2) und/oder Entladen von mit Artikeln (2) beladenen Tablaren (1), wobei das Verfahren die folgenden Schritte umfasst:
Transportieren eines Tablars (1) mittels eines ersten Förderers (3) in einer Transportrichtung,
Absenken des Tablars (1) mittels einer an den ersten Förderer (3) anschließenden Absenkvorrichtung (4, 17) auf einen an die Absenkvorrichtung (4, 17) anschließenden Leistenförderer (6), wobei das Niveau des Leistenförderers (6) gegenüber dem Niveau des ersten Förderers (3) abgesenkt ist,
Transportieren des Tablars (1) mittels des Leistenförderers (6) zu einer an den Leistenförderer (6) anschließenden Aushubvorrichtung (8, 18),
Ausheben des Tablars (1) von dem Leistenförderer (6) mittels der Aushubvorrichtung (8, 18),
Transportieren des Tablars (1) zu einem an die Aushubvorrichtung (8, 18) anschließenden zweiten Förderer (10), wobei das Niveau des Leistenförderers (6) gegenüber dem Niveau des zweiten Förderers (10) abgesenkt ist,
wobei die Tablare (1) Schlitze (19) umfassen, die so ausgebildet sind, dass sie Leisten (7) des Leistenförderers (6) aufnehmen können,
**dadurch gekennzeichnet, dass**
bei dem Absenken des Tablars (1) auf den Leistenförderer (6) mittels der Absenkvorrichtung (4, 17) die Leisten (7), die auf dem Leistenförderer (6) angeordnet sind, senkrecht zu einer Oberfläche des Leistenförderers (6) angeordnet sind und senkrecht in die Schlitze (19) des Tablars (1) eintauchen und
bei dem Ausheben des Tablars (1) von dem Leistenförderer (6) mittels der Aushubvorrichtung (8, 18) die Leisten (7) senkrecht zu der Oberfläche des Leistenförderers (6) angeordnet sind und senkrecht aus den Schlitzen (19) des Tablars (1) austauchen.

19. Das Verfahren nach Anspruch 18, wobei das Verfahren weiter Synchronisieren von Schlitzen (19) eines Tablars (1) mit den Leisten (7) umfasst, wobei bei dem Synchronisieren eine Wirkung auf ein Tablar (1) ausgeübt wird, wenn ein Steg (21) des Tablars (1) auf eine Leiste (7) des Leistenförderers (6) trifft, wobei der Steg (21) zwischen zwei Leisten (7) angeordnet ist.

20. Das Verfahren nach Anspruch 18 oder 19, wobei das Verfahren weiter ein Beladen eines Tablars (1) mit einem Artikel (2) umfasst, wobei der Artikel (2) mittels eines begleitenden Förderers (13) transportiert wird, der sich auf dem Niveau des Leistenförderers (6) befindet, wobei der Artikel (2) mittels eines Ab- und Aufschiebeelements (12) von dem begleitenden Förderer (13) auf die Leisten des Leistenförderer (6) verbracht wird, die in die Schlitze des Tablars (1) eingebracht sind und/oder wobei das Verfahren weiter ein Entladen eines Tablars (1), auf dem sich ein Artikel (2) befindet, umfasst, wobei der Artikel (2) mittels des Ab- und Aufschiebeelements (12) von den Leisten des Leistenförderer (6), die in die Schlitze des Tablars (1) eingebracht sind, auf den begleitenden Förderer (13) verbracht wird.

## Claims

1. System for loading trays (1) with articles (2) and/or unloading trays (1) loaded with articles (2), wherein the system comprises:
a plurality of trays (1),
a first conveyor (3), which is provided for transport of trays (1), wherein the trays (1) are moved in a transport direction,
a rail conveyor (6),
a lowering device (4, 17) adjoining the first conveyor (3), wherein the lowering device (4, 17) is provided to transport the trays (1) from the first conveyor (3) to the rail conveyor (6) adjoining the lowering device (4, 17), wherein the level of the rail conveyor (6) is lowered compared to the level of the first conveyor (3) and wherein the lowering device (4, 17) is further provided to lower the trays (1) onto the rail conveyor (6),
a second conveyor (10),
a lifting device (8, 18) adjoining the rail conveyor (6), wherein the lifting device (8, 18) is provided to transport the trays (1) from the rail conveyor (6) to the second conveyor (10) adjoining the lifting device (8, 18), wherein the level of the rail conveyor (6) is lowered compared to the level of the second conveyor (10), and wherein the lifting device (8, 18) is further provided to lift the trays (1) from the rail conveyor (6),
wherein the trays (1) comprise slots (19) which are adapted such that they can receive the rails (7) of the rail conveyor (6),
**characterised in that**
the rails (7), which are arranged on the rail conveyor (6), are arranged perpendicular to a surface of the rail conveyor (6) and immerse perpendicularly into the slots (19) of the tray (1) when a tray (1) is lowered onto the rail conveyor (6) by means of the lowering device (4, 17), and wherein the rails (7) are arranged perpendicular to the surface of the rail conveyor (6) and emerge perpendicularly from the slots (19) of the tray (1) when the tray (1) is lifted from the rail conveyor (6) by means of the lifting device (8, 18).

2. The system according to claim 1, wherein the system further comprises a synchronisation means for synchronising slots (19) of a tray (1) with the rails (7), with which an effect is produced on a tray (1) if a web (21) of the tray (1) meets a rail (7) of the rail conveyor (6), wherein the web (21) is arranged between two rails (7).

3. The system according to claim 2, wherein the synchronisation means comprises a braking means (11) comprising a scraper brush or a spring-loaded pressure strip.

4. The system according to claim 2, wherein the synchronisation means comprises a braking means (11) comprising a band or a friction wheel which produces a braking effect by way of a rotating field magnet or a hysteresis element and is pressed by a resilient means.

5. The system according to claim 2, wherein the synchronisation means comprises carriers mounted on the rail conveyor (6), wherein preferably the on-going transport of a tray (1) is supported by the carriers, wherein the carriers are preferably adapted such that they project beyond the rails (7) and are arranged on the rail conveyor (6) at a distance greater than one tray length.

6. The system according to any one of claims 1 to 5, wherein the lowering device (4, 17) comprises a first inclined plane (4) by means of which the tray (1) is lowered from the first conveyor (3) onto the rail conveyor (6) and wherein the lifting device (8, 18) comprises a second inclined plane (8) by means of which the tray (1) is lifted from the rail conveyor (6) onto the second conveyor (10).

7. The system according to claim 6, wherein the first inclined plane (4) and the second inclined plane (8) each comprise at least one slide rail, wherein preferably the at least slide rail respectively comprises driven rollers and/or non-driven rollers.

8. The system according to any one according to claims 1 to 5, wherein the lowering device (4, 17) comprises a first section flanged roller path (17) by means of which the tray (1) is lowered from the first conveyor (3) onto the rail conveyor (6) and wherein the lifting device (8, 18) comprises a second section flanged roller path (18) by means of which the tray (1) is lifted from the rail conveyor (6) onto the second conveyor (10).

9. The system according to claim 8, wherein the first section flanged roller path (17) comprises sections (17_{1,} 17₂, 17₃, 17₄) which can be lowered and raised and/or the second section flanged roller path (18) comprises sections (18₁, 18₂, 18₃, 18₄), which can be lowered and raised.

10. The system according to claim 9, wherein with lowering of sections (17₁, 17₂, 17₃, 17₄) of the first section flanged roller path (17), all sections (17₁, 17₂, 17₃, 17₄) are lowered preferably simultaneously and/or wherein with lifting of the sections (18₁, 18₂, 18₃, 18₄) of the second section flanged roller conveyor (18), all the sections (18₁, 18₂, 18₃, 18₄) are preferably raised simultaneously.

11. The system according to claim 9 or 10, wherein with lowering of the sections (17₁, 17₂, 17₃, 17₄) of the first section flanged roller conveyor (17), a plurality of sections (17₁, 17₂, 17₃, 17₄) are preferably lowered simultaneously and/or wherein with lifting of the sections (18₁, 18_{2,} 18₃, 18₄) of the second section flanged roller conveyor (18), a plurality of sections (18₁, 18₂, 18₃, 18₄) is preferably raised simultaneously.

12. The system according to any one claims 1 to 11, wherein the system further comprises an accompanying conveyor (13) at the level of the rail conveyor (6), wherein the accompanying conveyor is provided (13) to transport articles (2) with which trays can be loaded (1) and/or to receive articles (2) which are unloaded from trays (1).

13. The system according to claim 12, wherein the system further comprises a pushing-off and a pushing-on element (12) in the form of a mechanical guide over the rail conveyor (6) for unloading articles (2) onto the accompanying conveyor (13) and for loading the tray ( 1) with articles (2) from the accompanying conveyor (13), wherein the mechanical guide is preferably provided with rollers for improved sliding friction or is designed so as to be actively driven, wherein the pushing-off and pushing-on element (12) preferably has a curved contour, zones of different sliding friction and/or active drives or a drive roller is preferably provided at one end of the deflector.

14. The system according to claim 13, wherein the pushing-off and pushing-on element (12) is provided in the form of a pusher moving over the rail conveyor (6) in synchronism with the rail conveyor (6) for unloading articles (2) onto the accompanying conveyor (13) or for loading the tray (1) with articles (2) from the accompanying conveyor (13).

15. The system according to any one of 1 to 14, wherein the rails (7) comprise rounded edges with low static and sliding friction transversely to the transport direction of the rail conveyor (6).

16. The system according to any one of claims 1 to 15, wherein unloading and/or loading occurs in the case of continuously driven rail conveyors (6).

17. The system according to any one of claims 2 to 16, wherein the synchronisation of slots (19) with the rails occurs in the case of continuously driven rail conveyors (6).

18. A method for loading trays (1) with articles (2) and/or unloading of trays (1) loaded with articles (2), wherein the method comprises the following steps:
transporting a tray (1) by means of a first conveyor (3) in a transport direction,
lowering the tray (1) by means of a lowering device (4, 17) adjoining the first conveyor (3) onto a rail conveyor (6) adjoining the lowering device (4, 17), wherein the level of the rail conveyor (6) is lowered compared to the level of the first conveyor (3),
transporting the tray (1) by means of the rail conveyor (6) to a lifting device (8, 18) adjoining the rail conveyor (6),
lifting the tray (1) from the rail conveyor (6) by means of the lifting device (8, 18),
transporting the tray (1) to a second conveyor (10) adjoining the lifting device (8, 18), wherein the level of the rail conveyor (6) is lowered compared to the level of the second conveyor (10),
wherein the trays (1) comprise slots (19) which are designed in such a way that they can receive rails (7) of the rail conveyor (6),
**characterised in that**
the rails (7), which are arranged on the rail conveyor (6), are arranged perpendicular to a surface of the rail conveyor (6) and immerse perpendicularly into the slots (19) of the tray (1) when the tray (1) is lowered onto the rail conveyor (6) by means of the lowering device (4, 17), and
wherein the rails (7) are arranged perpendicular to the surface of the rail conveyor (6) and emerge perpendicularly from the slots (19) of the tray (1) when the tray (1) is lifted from the rail conveyor (6) by means of the lifting device (8, 18).

19. The method according to claim 18, wherein the method further comprises synchronisation of slots (19) of a tray (1) with the rails (7), wherein during synchronisation an effect is produced on a tray (1) if a web (21) of the tray (1) meets a rail (7) of the rail conveyor (6), wherein the web (21) is arranged between two rails (7).

20. The method according to claim 18 or 19, wherein the method further comprises loading a tray (1) with an article (2), wherein the article (2) is transported by means of an accompanying conveyor (13) situated at the level of the rail conveyor (6), wherein the article (2) is brought by means of a pushing-off and pushing-on element (12) from the accompanying conveyor (13) onto the rails of the rail conveyor (6) which are inserted into the slots of the tray (1) and/or wherein the method further comprises unloading a tray (1) on which an article (2) is situated, wherein the article (2) is brought by means of the pushing-off and pushing-on element (12), from the rails of the rail conveyor (6), which are inserted into the slots of the tray (1), onto the accompanying conveyor (13).

## Revendications

1. Système pour charger des plateaux (1) avec des articles (2) et/ou pour décharger des plateaux (1) chargés d'articles (2), le système comprenant :
plusieurs plateaux (1),
un premier transporteur (3), qui est prévu pour le transport des plateaux (1), les plateaux (1) étant déplacés dans une direction de transport,
un transporteur à barres (6),
un dispositif d'abaissement (4, 17) se raccordant au premier transporteur (3), le dispositif d'abaissement (4, 17) étant prévu pour transporter les plateaux (1) du premier transporteur (3) au transporteur à barres (6) se raccordant au dispositif d'abaissement (4, 17), le niveau du transporteur à barres (6) étant abaissé par rapport au niveau du premier transporteur (3), et le dispositif d'abaissement (4, 17) étant en outre prévu pour abaisser les plateaux (1) sur le transporteur à barres (6),
un deuxième transporteur (10),
un dispositif de soulèvement (8, 18) se raccordant au transporteur à barres (6), le dispositif de soulèvement (8, 18) étant prévu pour transporter les plateaux (1) du transporteur à barres (6) au deuxième transporteur (10) se raccordant au dispositif de soulèvement (8, 18), le niveau du transporteur à barres (6) étant abaissé par rapport au niveau du deuxième transporteur (10), et le dispositif de soulèvement (8, 18) étant en outre prévu pour soulever les plateaux (1) hors du transporteur à barres (6),
les plateaux (1) présentant des fentes (19), qui sont réalisées de manière à pouvoir y recevoir des barres (7) du transporteur à barres (6),
**caractérisé en ce que**
les barres (7), qui sont agencées sur le transporteur à barres (6), sont, lors d'un abaissement du plateau (1) sur le transporteur à barres (6) au moyen du dispositif d'abaissement (4, 17), agencées perpendiculairement à une surface du transporteur à barres (6) et s'engagent verticalement dans les fentes (19) du plateau (1), et,
lors d'un soulèvement du plateau (1) du transporteur à barres (6) au moyen du dispositif de soulèvement (8, 18), les barres (7) sont agencées perpendiculairement à la surface du transporteur à barres (6), et s'échappent verticalement des fentes (19) du plateau (1).

2. Le système selon la revendication 1, ce système comprenant, par ailleurs, un moyen de synchronisation pour synchroniser les fentes (19) d'un plateau (1) avec les barres (7), et à l'aide duquel une action est exercée sur un plateau (1) lorsqu'une nervure (21) du plateau (1) rencontre une barre (7) du transporteur à barres (6), la nervure (21) étant agencée entre deux barres (7).

3. Le système selon la revendication 2, dans lequel le moyen de synchronisation comprend un moyen de freinage (11) comportant une brosse racleuse ou une barre d'appui à ressort.

4. Le système selon la revendication 2, dans lequel le moyen de synchronisation comprend un moyen de freinage (11) comportant une bande ou une roue de friction, qui engendre une action de freinage moyennant un aimant à champ tournant ou un élément d'hystérésis, et qui est appliqué par l'intermédiaire d'un moyen à ressort.

5. Le système selon la revendication 2, dans lequel le moyen de synchronisation comprend des entraîneurs placés sur le transporteur à barres (6), dans lequel la suite du transport d'un plateau (1) est assisté par les entraîneurs, et dans lequel les entraîneurs sont de préférence réalisés de manière à dépasser au-dessus des barres (7) et de façon à être agencés sur le transporteur à barres (6) selon une distance d'espacement supérieure à une longueur de plateau.

6. Le système selon l'une des revendications 1 à 5, dans lequel le dispositif d'abaissement (4, 17) présente un premier plan incliné (4) au moyen duquel s'effectue un abaissement du plateau (1) du premier transporteur (3) sur le transporteur à barres (6), et dans lequel le dispositif de soulèvement (8, 18) présente un deuxième plan incliné (8) au moyen duquel s'effectue un soulèvement du plateau (1) à partir du transporteur à barres (6) sur le deuxième transporteur (10).

7. Le système selon la revendication 6, dans lequel le premier plan incliné (4) et le deuxième plan incliné (8) comprennent chacun au moins une barre de glissement, et dans lequel ladite au moins une barre de glissement comprend respectivement des galets entraînés et/ou des galets non entraînés.

8. Le système selon l'une des revendications 1 à 5, dans lequel le dispositif d'abaissement (4, 17) comprend une première voie à rouleaux à boudin sectionnelle (17), au moyen de laquelle s'effectue un abaissement du plateau (1) du premier transporteur (3) sur le transporteur à barres (6), et dans lequel le dispositif de soulèvement (8, 18) présente une deuxième voie à rouleaux à boudin sectionnelle (18) au moyen de laquelle s'effectue un soulèvement du plateau (1) à partir du transporteur à barres (6) sur le deuxième transporteur (10).

9. Le système selon la revendication 8, dans lequel la première voie à rouleaux à boudin sectionnelle (17) comprend des sections (17₁, 17₂, 17₃, 17₄) qui peuvent être abaissées et soulevées, et /ou la deuxième voie à rouleaux à boudin sectionnelle (18) comprend des sections (18₁, 18₂, 18₃, 18₄) qui peuvent être abaissées et soulevées.

10. Le système selon la revendication 9, dans lequel lors d'un abaissement des sections (17₁, 17₂, 17₃, 17₄) de la première voie à rouleaux à boudin sectionnelle (17), toutes les sections (17₁, 17₂, 17₃, 17₄) sont de préférence abaissées simultanément, et/ou dans lequel lors d'un soulèvement des sections (18₁, 18₂, 18₃, 18₄) de la deuxième voie à rouleaux à boudin sectionnelle (18), toutes les sections (18₁, 18₂, 18₃, 18₄) sont de préférence soulevées simultanément.

11. Le système selon la revendication 9 ou la revendication 10, dans lequel lors d'un abaissement des sections (17₁, 17₂, 17₃, 17₄) de la première voie à rouleaux à boudin sectionnelle (17), plusieurs sections (17₁, 17₂, 17₃, 17₄) sont de préférence abaissées simultanément, et/ou dans lequel lors d'un soulèvement des sections (18₁, 18₂, 18₃, 18₄) de la deuxième voie à rouleaux à boudin sectionnelle (18), plusieurs sections (18₁, 18₂, 18₃, 18₄) sont de préférence soulevées simultanément.

12. Le système selon l'une des revendications 1 à 11, ce système comprenant, par ailleurs, un transporteur accompagnant (13) sur le niveau du transporteur à barres (6), le transporteur accompagnant (13) étant prévu transporter des articles (2), avec lesquels peuvent être chargés des plateaux (1) et/ou pour recevoir des articles (2), qui sont déchargés de plateaux (1).

13. Le système selon la revendication 12, ce système comprenant, par ailleurs, un élément pousseur de déchargement et de chargement (12) sous la forme d'un guidage mécanique au-dessus du transporteur à barres (6), pour décharger des articles (2) sur le transporteur accompagnant (13) ou respectivement charger des articles (2) du transporteur accompagnant (13) sur le plateau (1), dans lequel le guidage mécanique est de préférence prévu à l'aide de petits galets pour une meilleure friction de glissement, ou est réalisé par entraînement actif, et dans lequel l'élément pousseur de déchargement et de chargement (12) présente de préférence un contour cintré, des zones de différente friction de glissement et/ou des entraînements actifs, ou il est de préférence prévu un galet d'entraînement à une extrémité du déflecteur.

14. Le système selon la revendication 13, dans lequel l'élément pousseur de déchargement et de chargement (12) est prévu sous la forme d'un pousseur se déplaçant par-dessus le transporteur à barres (6) et de manière synchrone avec le transporteur à barres (6), pour le déchargement d'articles (2) sur le transporteur accompagnant (13) et respectivement pour le chargement du plateau (1) avec des articles (2) en provenance du transporteur accompagnant (13).

15. Le système selon l'une des revendications 1 à 14, dans lequel les barres (7) présentent des bords arrondis avec une faible friction de glissement et d'adhérence transversalement à la direction de transport du transporteur à barres (6).

16. Le système selon l'une des revendications 1 à 15, dans lequel le déchargement et/ou le chargement s'effectuent avec un transporteur à barres (6) entraîné en continu.

17. Le système selon l'une des revendications 2 à 16, dans lequel la synchronisation des fentes (19) avec les barres s'effectue avec un transporteur à barres (6) entraîné en continu.

18. Procédé pour charger des plateaux (1) avec des articles (2) et/ou pour décharger des plateaux (1) chargés d'articles (2), le procédé comprenant les étapes suivantes :
transport d'un plateau (1) au moyen d'un premier transporteur (3) dans une direction de transport,
abaissement du plateau (1), au moyen d'un dispositif d'abaissement (4, 17) se raccordant au premier transporteur (3), sur un transporteur à barres (6) se raccordant au dispositif d'abaissement (4, 17), le niveau du transporteur à barres (6) étant abaissé par rapport au niveau du premier transporteur (3),
transport du plateau (1), au moyen du transporteur à barres (6), jusqu'à un dispositif de soulèvement (8, 18) se raccordant au transporteur à barres (6),
soulèvement du plateau (1) du transporteur à barres (6) au moyen du dispositif de soulèvement (8, 18),
transport du plateau (1) jusqu'à un deuxième transporteur (10) se raccordant au dispositif de soulèvement (8, 18), le niveau du transporteur à barres (6) étant abaissé par rapport au niveau du deuxième transporteur (10),
les plateaux (1) présentant des fentes (19), qui sont réalisées de manière à pouvoir y recevoir des barres (7) du transporteur à barres (6),
**caractérisé en ce que**
lors de l'abaissement du plateau (1) sur le transporteur à barres (6) au moyen du dispositif d'abaissement (4, 17), les barres (7), qui sont agencées sur le transporteur à barres (6), sont agencées perpendiculairement à une surface du transporteur à barres (6) et s'engagent verticalement dans les fentes (19) du plateau (1), et
lors du soulèvement du plateau (1) du transporteur à barres (6) au moyen du dispositif de soulèvement (8, 18), les barres (7) sont agencées perpendiculairement à la surface du transporteur à barres (6), et s'échappent verticalement des fentes (19) du plateau (1).

19. Le procédé selon la revendication 18, ce procédé comprenant, par ailleurs, la synchronisation de fentes (19) d'un plateau (1) avec les barres (7), une action étant exercée sur un plateau (1) au cours de la synchronisation, lorsqu'une nervure (21) du plateau (1) rencontre une barre (7) du transporteur à barres (6), la nervure (21) étant agencée entre deux barres (7).

20. Le procédé selon la revendication 18 ou la revendication 19, ce procédé comprenant, par ailleurs, un chargement d'un plateau (1) avec un article (2), l'article (2) étant transporté au moyen d'un transporteur accompagnant (13), qui se trouve au niveau du transporteur à barres (6), l'article (2) étant transféré, au moyen d'un élément pousseur de déchargement et de chargement (12), du transporteur accompagnant (13) sur les barres du transporteur à barres (6), qui sont engagées dans les fentes du plateau (1), et/ou le procédé comprenant, par ailleurs, un déchargement d'un plateau (1) sur lequel se trouve un article (2), l'article (2) étant transféré, au moyen de l'élément pousseur de déchargement et de chargement (12), des barres du transporteur à barres (6), qui sont engagées dans les fentes du plateau (1), sur le transporteur accompagnant (13).
